# NEUE EUROPÄISCHE PATENTSCHRIFT

(11) **EP 2 195 713 B2**
(45) Veröffentlichungstag und Bekanntmachung des Hinweises auf die Entscheidung über den Einspruch: **04.09.2019**
(45) Hinweis auf die Patenterteilung: 19.10.2011
(21) Anmeldenummer: 08785680.3
(22) Anmeldetag: 22.08.2008
(51) Int. Cl.: G05B 19/042, H04L 29/12, G06F 13/40

(54) **GERÄT ZUM ANSCHLUSS AN EINEN BUS, UMRICHTER UND VERFAHREN ZUR ADRESSIERUNG**
DEVICE FOR CONNECTION TO A BUS, CONVERTER, AND ADDRESSING METHOD
APPAREIL À CONNECTER À UN BUS, CONVERTISSEUR ET PROCÉDÉ D'ADRESSAGE

(30) Priorität: 25.08.2007 DE 102007040424
(43) Veröffentlichungstag der Anmeldung: 16.06.2010
(73) Patentinhaber: SEW-EURODRIVE GmbH & Co. KG, 76646 Bruchsal (DE)
(72) Erfinder: DUNKER, Raphael, 76703 Kraichtal (DE)
(74) Vertreter: Tüngler, Eberhard
(86) Internationale Anmeldenummer: PCT/EP2008/006920
(87) Internationale Veröffentlichungsnummer: WO 2009/027060

(56) Entgegenhaltungen:
- WO-A-03/032174
- DE-A1- 10 206 657
- DE-A1- 19 639 352
- DE-A1- 19 743 981
- DE-C1- 19 606 673
- US-A1- 2006 136 621
- US-B1- 6 292 764
- Actuator Sensor Interface; Complete specification; Version 3.0, Revision 0, September 16, 2004

## Beschreibung

Die Erfindung betrifft ein Gerät zum Anschluss an einen Bus, also ein Feldgerät, einen Umrichter und ein Verfahren zur Adressierung.

Aus der US 6 292 764 B1 ist eine abstimmbare Architektur für eine Geräteadapter bekannt, bei der ein automatisiertes System zur Herstellung einer logischen Darstellung eines Adapters für den Anschluss eines Geräts an einen Bus bereitgestellt wird, wobei ein konfigurierbares Makro eine Mehrzahl verschiedenartiger logischer Darstellungen des Adapters liefert.

Aus der DE 196 06 673 C1 ist bekannt, dass mehreren Slaves, d. h. auch Teilnehmern, dieselbe aus n-Bit bestehen Slave-Adresse zugeordnet ist und ein bestimmter dieser Slaves bzw. Teilnehmer über im Informationsteil des zugehörigen Master-Telegramms enthaltene Informationsbits abrufbar ist, die ausschliesslich diesem bestimmten Slave bzw. Teilnehmer als Unteradresse in Verbindung mit seiner Slave-Adresse zugeordnet sind.

AS-Interface als ein bit-orientierter Feldbus auf der untersten Ebene der Automatisierungspyramide bekannt aus:
- der Publikation R. Becker (Hrsg.): AS-Interface, die Lösung in der Automation, Gelnhausen (2002): ASInternational Association, insbesondere Kapitel 3.2,
- dem Internet-Nachschlagewerk de.wikipedia.org,
- der DE 197 43 981 A1,
- der Norm EN 50295,
- der Internetseite http://www.as-interface.com/whatisasi.asp,
- der Präsentation "The AS-Interface Innovation Step 3.0" der AS-International Association vom 28.06.2005 und
- der Präsentation "AS-Interface" http: //www.emg.ing.tu-bs.de/pdf/IKFIAS-i_SS04.pdf.
Er ist optimiert für den Anschluss von einfachen Sensoren, Aktuatoren und Feldgeräten, die nur wenige Informationsbits mit der Steuerung austauschen. In einem Datentelegramm von AS-Interface sind daher nur 4 Informationsbits vom Master zum Slave und wieder zurück übertragbar. Unter einem Feldbus wird ein industrielles Kommunikationssystem verstanden, das eine Vielzahl von Feldgeräten wie Messfühler, beispielsweise Sensoren, Stellglieder und Antriebe, beispielsweise Aktoren mit einem Steuerungsgerät verbindet.

Moderne Feldgeräte, wie sie insbesondere in Anlagen mit dezentraler Steuerungstechnik Verwendung finden, benötigen aber oftmals zahlreiche Parameter, die zur Optimierung der Feldgerätefunktion variabel einstellbar sind.

Moderne Feldgeräte können darüber hinaus oftmals Diagnose- und Serviceinformationen sammeln, die eine schnelle Problembeseitigung im Störungsfall unterstützen. Hierzu zählen elektronisch übermittelbare Daten nicht nur über das Produkt, wie Hersteller, Typenbezeichnung, Produktionsdatum, Firmware-Stand, sondern auch über den Betrieb, wie Betriebsstunden, Anzahl der Start-/Stop-Vorgänge, Überlastzustände und dergleichen mehr.

Andere Feldgeräte, etwa zum Bedienen und Beobachten, weisen z.B. eine einfache Anzeige auf, auf der Messdaten ausgegeben werden und ein Tastenfeld, über das Kommandos an die Steuerung eingebbar sind. Auch hier sind verschiedene byte-orientierte und bit-oriertierte Funktionen logisch einander zugeordnet, wobei erstere für die Anzeige und letzte für die Tasten zum Einsatz kommen.

Um diesem Umstand Rechnung zu tragen, sind in der Spezifikation Version 3.0 Slave-Profile eingeführt worden, die sowohl über bit-orientierte als auch über byte-orientierte Datenaustauschmechanismen verfügen, siehe beispielsweise die zitierte Publikation AS-Interface, die Lösung in der Automation. Hier sei beispielhaft das Profil S-7.A.5 genannt. Bei diesem Profil werden je 2 Bit für einen seriellen Datenaustausch verwendet, es bleiben daher nur 1 oder 2 Bits für den schnellen bit-orientierten Datenaustausch übrig. Dies wiederum ist für viele Anwendungen -z. B. in der Antriebstechnik - zuwenig.

Der Erfindung liegt die Aufgabe zugrunde, den Datenaustausch bei einem Bussystem in einfacher und fehlerarmer Weise weiterzubilden.

Erfindungsgemäß wird die Aufgabe bei dem Gerät nach den in Anspruch 1, bei dem Umrichter nach den in Anspruch 9 und bei dem Verfahren zur Adressierung eines als Busteihehmer vorgesehenem Geräts nach den in Anspruch 12 und angegebenen Merkmalen gelöst

Wichtige Merkmale der Erfindung bei dem als Busteilnehmer vorgesehenem Gerät sind, dass es mittels eines Anschlusses mit einem Bus, insbesondere mit einem elektrischen Kabel, einer Stromschiene oder über eine Antenne mit Luft, verbunden ist, wobei Mittel zum Bereitstellen von zwei oder mehr Busteilnehmern umfasst sind und Mittel zum Zuordnen der über den Anschluss einströmenden und/oder ausgetauschten Daten an die zwei oder mehr Busteilnehmer umfasst sind. Derartige als Busteilnehmer vorgesehene Geräte werden auch als Feldgerät bezeichnet. Vorteilig ist bei der Erfindung, dass über einen Anschluss zwei oder mehr Busteilnehmer an einen Bus anschließbar sind, was die Verkabelung vereinfacht. Auch können vorteilhaft durch die Bereitstellung mehrerer Busteilnehmer einerseits schnelle, bit-orientierte Daten und andererseits langsame, byte-orientierte, komplexer Daten ausgetauscht werden. Somit ist der Datenaustausch zwischen Master und Slave in einem Feldbus-System derart weitergebildet, dass je nach Anforderung verschiedene Datenaustauschmechanismen auf einfache und fehlerarme Weise einsetzbar sind. Von Vorteil ist weiter, dass ein Feldgerät eine Gruppe von Slaves enthält und somit über verschiedene Datenaustauschmechanismen unterschiedliche Datentypen mit einem Master austauschen kann.

Wichtige Merkmale der Erfindung bei dem an einem Bus angeschlossenen Gerät sind, dass dieses in einem ersten Modus einen logischen Slave, insbesondere Busteilnehmer, realisiert, und in einem zweiten Modus mindestens zwei logische Slaves, insbesondere Busteilnehmer, realisiert. Somit wird vorteilhaft bewirkt, dass je nach Anforderungen, beispielsweise an den Datenaustausch, zwischen verschiedenen Modi gewechselt werden kann. Insbesondere ist somit beispielsweise für eine Initialisierung des Geräts oder die Integration in das Feldbussystem ein einfach handhabbarer Modus wählbar, während für einen komplexen Datenaustausch ein komplexer Modus mit mehreren Busteilnehmer wählbar ist.

Bei einer weiteren vorteilhaften Ausgestaltung ist im ersten Modus genau ein logischer Slave, insbesondere Busteilnehmer, realisiert. Von Vorteil ist dabei, dass die Inbetriebnahme, insbesondere Anmeldung im Feldbus-System oder Adresszuweisung, einfach vornehmbar ist.

Bei einer vorteilhaften Ausgestaltung ist ein zweiter Bus mit mindestens zwei Busteilnehmern angeschlossen, und der Master des zweiten Busses ist vom Gerät umfasst. Von Vorteil ist dabei, dass ein Busumsetzer bereitgestellt ist, der zwischen einem Standardbus und einem zweiten, individuell spezifizierten Bus vermittelt. Somit sind selbständige Automatisierungszellen bildbar, die von dem Standardbus ansteuerbar sind, wobei eine Kommunikation innerhalb einer Automatisierungszelle nicht den Standardbus belastet.

Bei einer vorteilhaften Ausgestaltung repräsentiert nach Adressenvergabe mindestens ein Teil der logischen Slaves die Busteilnehmer des zweiten Busses. Von Vorteil ist dabei, dass die Busteilnehmer des zweiten Busses direkt als Busteilnehmer des ersten Busses, der als ein Standardbus ausgebildet ist, an der Kommunikation im ersten Bus teilnehmen.

Bei einer vorteilhaften Ausgestaltung ist der zweite Bus ein Systembus mit integriertem Energiebus, insbesondere wobei die Datenkommunikation durch Modulation eines Leistungssignals erfolgt. Von Vorteil ist dabei, dass ein flexibel konfigurierbares System bildbar ist, die eine Automatisierungszelle in einer Anlage mit dezentral organisierter Hierarchie darstellt. Insbesondere ist ein ohnehin notwendiger Energiebus zusätzlich zur Steuerung oder Datenkommunikation einsetzbar, wobei die Leistungsversorgung vom Gerät bereitgestellt ist. Beispielhaft ist das Gerät ein Umrichter, und der Energiebus ist eine 24V-Leitung zur Versorgung von. Sensoren oder Aktoren.

Bei einer vorteilhaften Ausgestaltung ist der zweite Bus berührungslos angekoppelt, insbesondere induktiv. Von Vorteil ist dabei, dass Steckverbinder zum Anschluss verzichtbar sind. Somit ist die Anlage resistenter gegen feindliche Umgebungsbedingungen.

Bei einer weiteren vorteilhaften Ausgestaltung ist der Bus ein Feldbus, insbesondere CAN, CAN-Open, DeviceNet, Profibus, INTERBUS, AS-interface, Ethernet, Wireless-LAN, EIB, LCN. Von Vorteil ist dabei, dass der Busteilnehmer an einen standardisierten Bus anschließbar ist. Somit ist die erfindungsgemäße Vorrichtung modular in handelsüblichen Anlagen einsetzbar, insbesondere in Anlagen mit dezentraler Technik.

Die Erfindung ist besonders vorteilhaft einsetzbar bei Bussystemen, die wenigsten einen Master und mehrere Slaves umfassen, wobei der Master an die Slaves Adressen vergibt.

Bei einer weiteren vorteilhaften Ausgestaltung ist der erste Modus ein Standardadressiermodus, bei einer weiteren vorteilhaften Ausgestaltung ist der zweite Modus ein erweiterter Adressiermodus. Von Vorteil ist dabei, dass, insbesondere bei Anschluss an einen AS-interface-Bus, im ersten Modus eine Adresse zuweisbar ist, die im zweiten Modus für eine Mehrzahl.von Busteilnehmern beziehungsweise logischen Slaves verwendbar ist, da im erweiterten Adressiermodus mit einer Adresse in den unterschiedlichen Zyklen unterschiedliche Slaves ansprechbar sind.

Bei einer weiteren vorteilhaften Ausgestaltung umfasst das Gerät eine Umschaltlogik, die bei einem Wechsel von einer Standardadresse, insbesondere von einer Auslieferungsadresse oder von Adresse "0", auf einen anderen Adressen-Wert das Gerät vom ersten in den zweiten Modus versetzt. Von Vorteil ist dabei, dass durch Standardvorgänge auf dem Bus ein Wechsel der Modi bewirkbar ist. Somit ist eine Erweiterung der Menge der über den Bus vermittelten Befehle und Kommandos vermeidbar.

Bei einer weiteren vorteilhaften Ausgestaltung arbeitet das Gerät bei Zuweisung der Adresse "0" im ersten Modus und bei Zuweisung einer Adresse ungleich ,0" im zweiten Modus. Von Vorteil ist dabei, dass ein ohnehin notwendiger Vorgang, nämlich die Adresszuweisung an ein durch Adresse "0" als an den Bus neu angeschlossen ausgewiesenes Gerät, für das Umschalten in den komplexeren Modus verwendbar ist. Somit ist die Adressvergabe in einem einfachen Verfahren durchführbar, durch einen Master oder mithilfe eines handelsüblichen Adressiergerätes. Besonders vorteilhaft bei der Wahl der Adresse "0" als funktionsunterscheidendes Merkmal ist, dass AS-interface-Slave bei Auslieferung diese Adresse belegen. Somit stellt sich das erfindungsgemäße Gerät bei Integration in ein AS-interface-Netzwerk bis zur Adressierung gegenüber dem Master als Standardslave dar. Für den Anwender besteht also vorteilhaft kein Unterschied zum Adressieren eines normalen Slaves, insbesondere gegebenenfalls eines AS-interface-Slaves. Nach Adressierung ist unmittelbar der zweite Modus bereitgestellt, der für den Hauptbetrieb des Feldgeräts vorgesehen ist. Weiter ist vorteilhaft die zugewiesene Adresse im zweiten Modus im erweiterten Adressiermodus, wie beispielsweise in der DE 102 06 657 A1 beschrieben, verwendbar. Es ist somit lediglich eine Adressvergabe für eine Mehrzahl von Slaves oder Busteilnehmern nötig. Es lassen sich deshalb vorteilhaft Doppeladressierungen vermeiden.

Bei einer weiteren vorteilhaften Ausgestaltung weisen die mindestens zwei logischen Slaves voneinander verschiedene Profile auf. Somit sind die realisierten Slaves für unterschiedliche Datenübertragungsmechanismen einsetzbar. Beispielsweise sind bit-orientierte Funktionen an einen Slave übertragbar und byte-orientierte Funktionen an einen weiteren Slave.

Wichtige Merkmale der Erfindung bei dem Gerät zum Anschluss an einen Bus sind, dass das Gerät einen Rechner umfasst, wobei im Rechner die state machine mindestens zweier Busteilnehmer abgebildet ist. Von Vorteil ist dabei, dass zwei oder mehr Busteilnehmer und/oder logische Slaves realisierbar sind.

Bei einer weiteren vorteilhaften Ausgestaltung umfasst das Gerät einen Slave-IC und den mit diesem verbundenen Rechner, insbesondere Mikroprozessor mit Speicher, wobei der Slave-IC im transparenten Modus verwendbar ist. Von Vorteil ist dabei, dass eine Kommunikation zwischen Bus und Mikroprozessor und eine Realisierung mehrerer Slaves einfach und kostengünstig ermöglicht ist.

Bei einer weiteren vorteilhaften Ausgestaltung ist der Busteilnehmer als AS-interface-Slave oder anderer Feldbus-Slave ausgebildet. Von Vorteil ist dabei, dass standardisierte Bus-Systeme einsetzbar sind, insbesondere bei Verwendung eines AS-interface-Busses.

Wichtige Merkmale der Erfindung bei dem Verfahren zur Adressierung eines als Busteilnehmer vorgesehenem Geräts sind, dass zwei logische Slaves umfasst sind, wobei
- das Gerät vor der Adressierung mit einer Standardadresse, insbesondere Adresse "0", versehen wird und in einem ersten Modus, insbesondere Standardadressiermodus, betrieben wird,
- dem Gerät eine andere Adresse zugewiesen wird,
- und dann das Gerät nach Adresszuweisung mindestens zwei logische Slaves realisiert.

Von Vorteil ist dabei, dass die Adressierung eines derartigen Geräts mit jedem bereits auf dem Markt befindlichen Adressiergerät durchführbar ist. Von Vorteil ist weiterhin, dass die Adresse "0" die Standardadresse bei Auslieferung oder Neuanmeldung im Bussystem eines Busteilnehmers darstellt und standardmäßig eine Adresszuweisung durch einen Master nach sich zieht. Insbesondere muss der Master oder alternative der Anwender eines solchen Geräts nur einen Adressiervorgang für die mindestens zwei logischen Slaves durchführen.

Bei einer weiteren vorteilhaften Ausgestaltung werden die Slaves im erweiterten Adressiermodus mit der zugewiesenen Adresse alternierend jeweils in aufeinanderfolgenden Zyklen als A-Adresse beziehungsweise B-Adresse angesprochen. Hierbei ist vorteilhaft, dass im Slave im Standardadressiermodus der gleiche Adressraum belegbar ist wie in den mindestens zwei logischen Slaves beispielsweise im erweiterten Adressiermodus. Der Adressvorgang ist somit vorteilhaft durchführbar, ohne dass die Gefahr der Doppeladressierung besteht.

Bei einer vorteilhaften Ausgestaltung ist ein zweiter Bus vorgesehen ist, wobei nach der Zuweisung einer Adresse das Gerät ermittelt, wie viele Busteilnehmer an den zweiten Bus angeschlossen sind. Von Vorteil ist dabei, dass eine modular erweiterbare und damit flexible Busarchitektur bereitgestellt ist, die besonders für dezentral organisierte Fertigungssysteme geeignet ist. Insbesondere ist somit ein Busumsetzer geschaffen, der von einem Standardbus auf einen flexibel gestaltbaren weiteren Bus umsetzt, wobei sich der Busumsetzer an die konkret vorliegenden Bedürfnisse des weiteren Busses, beispielsweise die Zahl der Teilnehmer oder die jeweils benötigten Übertragungsbandbreiten, automatisch anpasst. Am Gerät, das beispielsweise in einen Antrieb einer Fertigungsanlage integriert ist, sind somit je nach Anwendung weitere Geräte anschließbar, die mit dem Standardbus oder mit den Teilnehmer des weiteren Busses Daten und Steuerbefehle und Steuermeldungen austauschen können. Als weiterer Bus ist ein Systembus verwendbar, dessen Spezifikation auf die Anwendungen zugeschnitten ist.

Bei einer vorteilhaften Ausgestaltung realisiert das Gerät nach der Ermittlung der Anzahl der Busteilnehmer im zweiten Bus diese Anzahl als logische Slaves, wobei die logischen Slaves mit der zugewiesenen Adresse nacheinander in den Zyklen des ersten Busses angesprochen werden. Von Vorteil ist dabei, dass die Busteilnehmer des zweiten Busses direkt durch den Master des ersten Busses ansprechbar sind, ohne dass in einem Umsetzer eine Neuzuordnung oder eine Neuorganisation von Daten aufgrund von unterschiedlichen Übertragungsgeschwindigkeiten oder Datenpaketlängen nötig wäre.

Bei einer vorteilhaften Ausgestaltung umfasst die Ermittlungs-Anfrage an die Busteilnehmer des zweiten Busses eine Adressvergabe. Von Vorteil ist dabei, dass die Initialisierung der Busteilnehmer in einem Schritt mit der Erfassung der Größe des zweiten Busses durchführbar ist.

Bei einer vorteilhaften Ausgestaltung realisiert jeder Busteilnehmer des zweiten Busses nach der Ermittlungs-Anfrage durch das Gerät jeweils eine Anzahl logischer Slaves realisiert und meldet diese Anzahl als Antwort auf die Ermittlungs-Anfrage. Von Vorteil ist dabei, dass ein kaskadenartig strukturiertes System von Bussen bildbar ist.

Wichtige Merkmale der Erfindung bei dem Umrichter sind, dass ein Gerät zum Anschluss an einen Bus integriert ist. Von Vorteil ist dabei, dass im Umrichter Mittel zur Kommunikation mit einem Bussystem vorsehbar sind. Somit ist der Umrichter vorteilhaft in Anlagen mit dezentraler Technik.einsetzbär.

Bei einer weiteren vorteilhaften Ausgestaltung ist der Mikroprozessor des Geräts zum Anschluss an einen Bus in die Steuerung des Umrichters, insbesondere in die Ansteuerung der Leistungselektronik des Umrichters, integriert. Von Vorteil ist dabei, dass die ohnehin in der Steuerung des Umrichters vorhandene Rechenkapazität nutzbar ist für die Realisierung der logischen Slaves. Dies bewirkt vorteilhaft eine kompakte Bauform mit wenigen Komponenten.

Bei einer weiteren vorteilhaften Ausgestaltung sind Anschlussmittel für den Anschluss von Aktoren und/oder Sensoren und/oder einem Bus, beispielsweise MOVILINK^{®}, und/oder Schaltausgänge und/oder umfasst, wobei diese Anschlussmittel und/oder Schaltausgänge vom Bus ansteuerbar beziehungsweise auslesbar sind. Von Vorteil ist dabei, dass der Umrichter mit den integrierten Mitteln zusätzlich zu seiner namensgebenden Funktion als Slave zur Abarbeitung einfachster Funktionen und auch als Knoten im Bus-Netzwerk einsetzbar ist.

Weitere Vorteile ergeben sich aus den Unteransprüchen.

### Bezugszeichenliste

- 1: Feldgerät
- 2: AS-i-Leitung
- 3: Slave
- 3A: erster Slave
- 3B: zweiter Slave
- 4: Anschlussleitung
- 5: interne Leitung
- 6: Kontakt
- 7: interne Leitung
- 8: Anschluss
- 10: Slave-IC
- 11: Mikroprozessor
- 12, 13, 14: interne Datenleitung
- 30: Zustand im ersten Modus
- 31: RESET-Signal
- 32: Standardadressierungs-Signal
- 33: Zustand im zweiten Modus
- 34: weiterer Zustand im zweiten Modus
- 35: Buskommando, Sensordatum oder Aktorbefehl
- 50: Umrichter
- 52: Motor
- 53: Anschlusspunkt
- 54: Feldbus
- 55: Anschlussleitung
- 56: Steuerung
- 58: Slave
- 60: Leistungselektronik
- 62: Aktor
- 64, 66: Sensor
- 68: Bus
- 70: Applikationsmodul
- 71: virtueller Slave
- 72: Slave
- 73: Slave
- 74: Slave
- 75: virtueller Slave
- 76: virtueller Slave
- 77: Systembus
- 78: Energiebus

Die Erfindung wird nun anhand von Abbildungen näher erläutert:
Es zeigt:
- Figur 1 das Funktionsschaubild eines erfindungsgemäßes Feldgeräts nach Zuweisung der Adresse "0",
- Figur 2 das Funktionsschaubild eines erfindungsgemäßes Feldgeräts nach Zuweisung einer Adresse verschieden von "0",
- Figur 3 schematisch ein erfindungsgemäßes Feldgerät,
- Figur 4 die state machine eines erfindungsgemäßen Mikroprozessors,
- Figur 5 einen Umrichter mit Motor als erfindungsgemäßes Feldgerät.

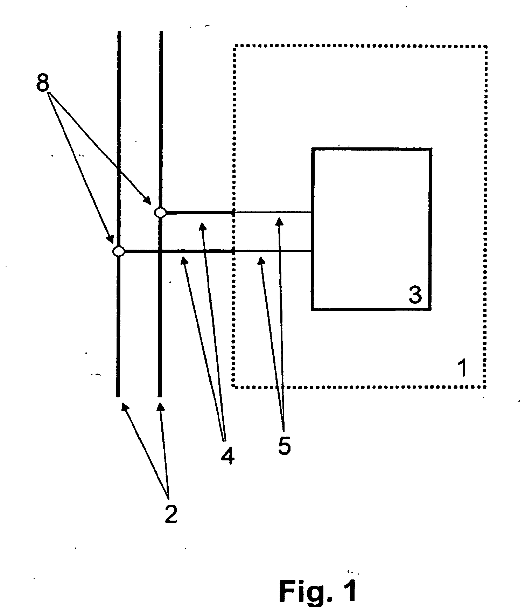

Figur 1 zeigt das Funktionsschaubild eines erfindungsgemäßen Feldgeräts 1, wenn diesem die Adresse "0" zugewiesen wurde. Dies ist zum Beispiel der Fall, wenn das Feldgerät 1 im Auslieferungszustand neu oder nach einer Wartung wieder im AS-interface-Netzwerk eingebaut wird.

Das Feldgerät 1 ist mit einer AS-interface-Leitung 2 über eine Anschlussleitung 4 und einen Anschluss 8 an einem Anschlusspunkt verbunden. Es nimmt über diese Anschlussleitung 4 am AS-interface-Netzwerk so teil, als wären die Anschlussleitungen 4 über innere Leitungen 5 mit einem Slave 3 verbunden, der ein Standardprofil, beispielsweise das Profil S-7.F.F, aufweist. Der Slave 3 und die inneren Leitungen 5 sind dabei virtuell, d.h. das Feldgerät 1 simuliert die dargestellte Funktion.

Ein ebenfalls an die AS-interface-Leitung angeschlossener Master kann nun das Feldgerät 1 anhand der Adresse "0" als neuen Teilnehmer erkennen und ihm in AS-interface-typischer Weise, wie es beispielsweise in der DE 197 43 981 A1 beschrieben wird, eine freie Adresse zuweisen. Diese Adresszuweisung ist alternativ mit einem handelsüblichen Adressiergerät durchführbar.

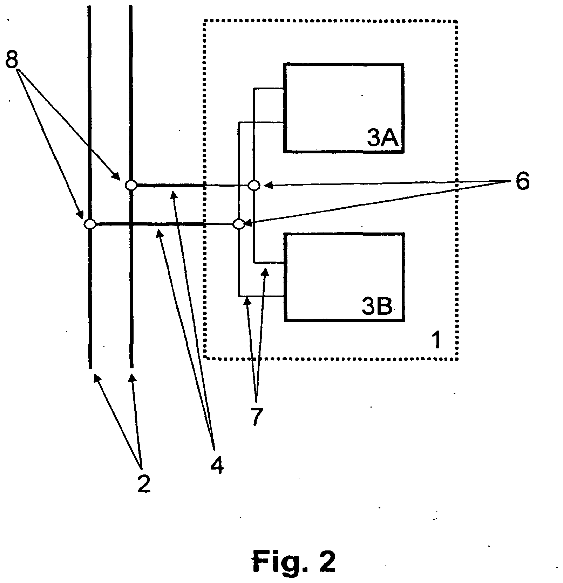

Figur 2 zeigt das Funktionsschaubild eines erfindungsgemäßen Feldgeräts 1, wenn diesem eine Adresse verschieden von "0" zugewiesen wurde. Dies kann zum Beispiel der Fall sein, wenn das Feldgerät 1 von einem Master als neuer Teilnehmer erkannt und mit einer freien Adresse belegt wurde.

Das Feldgerät 1 ist mit einer AS-interface-Leitung 2 über eine Anschlussleitung 4 an einem Anschluss 8 in einem Anschlusspunkt verbunden. Es nimmt über diese Anschlussleitung am AS-interface-Netzwerk im Unterschied zu dem in Figur 1 dargestellten Fall als Busteilnehmer des Bussystems so teil, als wären die Anschlussleitungen 4 über innere Leitungen 7, und eine innere Verzweigung 6 mit zwei Slaves 3A und 3B verbunden. Diese Slaves weisen vorteilhaft verschiedene Profile auf, beispielsweise Slave 3A das Profil S-7.A.7 für eine schnelle binäre und also bit-orientierte Ein- und Ausgabe und Slave 3B das Profil S-7.A.5 für zusätzliche digitale und also byte-orientierte Ein- und Ausgabe.

Das AS-interface-Netzwerk wird nun im erweiterten Adressiermodus betrieben, und der Slave 3A spricht auf die Adresse des Feldgeräts 1 im A-Zyklus an, während der Slave 3B auf die Adresse des Feldgeräts 1 im B-Zyklus anspricht.

Das Feldgerät 1 simuliert also den Anschluss zweier Slaves 3A und 3B an das AS-interface-Netzwerk, wobei Slave 3A die Adresse des Feldgeräts 1 als A-Adresse verwendet, während Slave 3B diese Adresse als B-Adresse benutzt. Aus einem logischen Slave bei Adresse "0" werden also zwei oder mehr logische Slaves mit beliebig vorgebbaren Profilen, wenn die Adresse ungleich "0" ist.

Bei einem weiteren erfindungsgemäßen Ausführungsbeispiel simuliert das Feldgerät 1 den Anschluss von drei, vier oder mehr Slaves über die Anschlussleitung 4, wenn ihm nicht die Adresse "0" zugewiesen wurde. Für die Simulation von mehr als zwei Slaves werden dem Feldgerät mehr als eine Adresse zugewiesen, die in Analogie zu dem Beispiel von Figur 2 im erweiterten Adressierverfahren verwendbar sind, oder es wird ein Adressiermodus verwendet, der nach Art des erweiterten Adressiermodus drei, vier oder mehr verschiedene Zyklen aufweist.

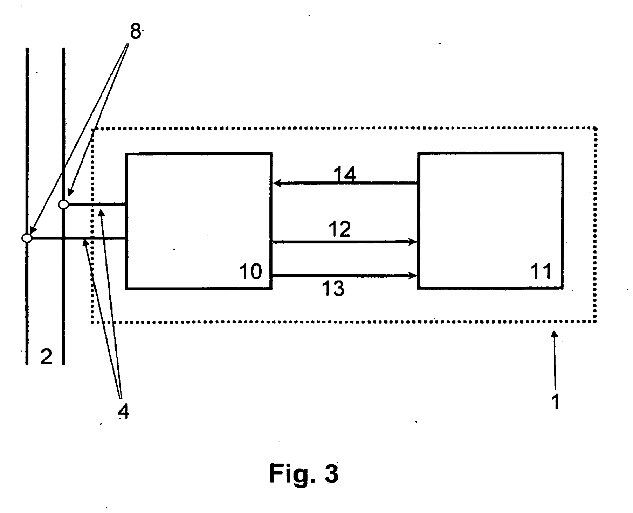

Figur 3 zeigt ein erfindungsgemäßes Ausführungsbeispiel eines Feldgeräts. Ein Feldgerät 1 ist über Anschlussleitungen 4 mit einer AS-interface-Leitung 2 verbunden und umfasst einen handelsüblichen Slave-IC 10, also integrierten Schaltkreis, und einen Mikroprozessor 11. Der Slave-IC 10 wird im transparenten Modus betrieben und gibt also die von der AS-interface-Leitung 2 über die Anschlussleitungen 4 bezogenen Daten über eine interne Datenleitung 12 weiter an den Mikroprozessor 11 und von diesem über eine weitere interne Datenleitung 14 empfangene Daten an die AS-Interface-Leitung 2. Zusätzlich bezieht dieser Mikroprozessor 11 vom Slave-IC 10 das clock-Signal über eine weitere interne Datenleitung 13. In der Firmware des Mikroprozessors 11 ist die state machine mindestens eines AS-interface-Slaves abgebildet, also der Endliche Automat, der alle möglichen Zustände des AS-interface-Slaves und die erlaubten Übergänge zwischen diesen Zuständen modelliert. Derartige state machines werden in A. Hunt und D. Thomas: State Machines, IEEE Software November/December 2002, S. 10-12 beschrieben. In dem Mikroprozessor 11 sind somit zwei oder mehr logische Slaves realisierbar, und der Mikroprozessor 11 kann je nach zugewiesener Adresse, die von einem Adressiergerät oder dem Master über den Slave-IC 10 übermittelt wird, eine vorbestimmte Zahl von logischen Slaves simulieren.

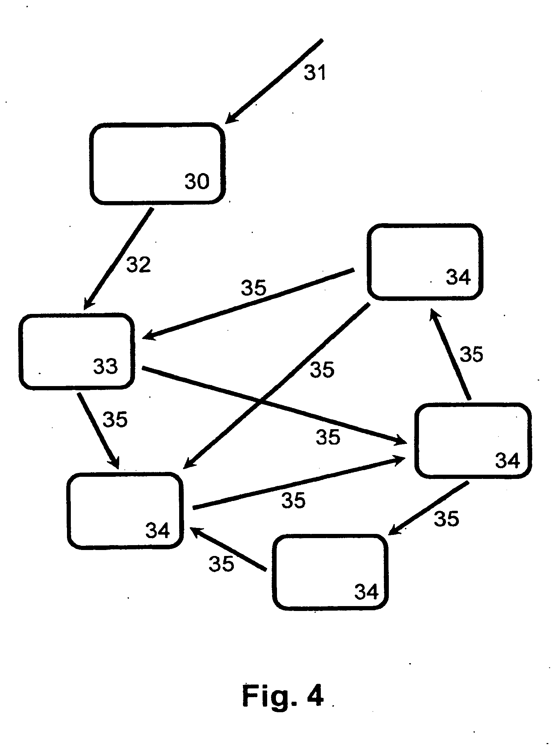

Figur 4 zeigt schematisch die state machine eines Mikroprozessors 11, wie er in Figur 3 einsetzbar ist. Nach einem RESET-Signal 31 oder im Auslieferungszustand befindet sich der Mikroprozessor 11 in einem ersten Modus 30, in dem er mittels Standardadressierungs-Signalen 32 vom AS-interface-Bus eine Adresse zugewiesen bekommt und in einen Zustand 33 eines zweiten Modus übergeht. Dieser Übergang ist durch eine Umschaltlogik bewirkbar. Der zweite Modus umfasst diesen Zustand 33 und weitere Zustände 34, die mindestens die möglichen Zustände zweier logischer Slaves 3A, 3B umfassen. Insbesondere beschreibt also der Zustand 33 zwei logische Slaves, die im erweiterten Adressiermodus betreibbar sind, ein jeder in einem der beiden Zyklen und mit der durch das Standardadressierungs-Signal 32 zugewiesenen Adresse. Zwischen diesen Zuständen 33, 34 werden durch Buskommandos, Daten von an den Mikroprozessor angeschlossenen Sensoren oder Aktoren oder durch die Abgabe von Kommandos an Aktoren Übergänge 35 bewirkt, wie sie für die Realisierung der mindestens zwei logischen Slaves 3A, 3B nötig und typisch sind.

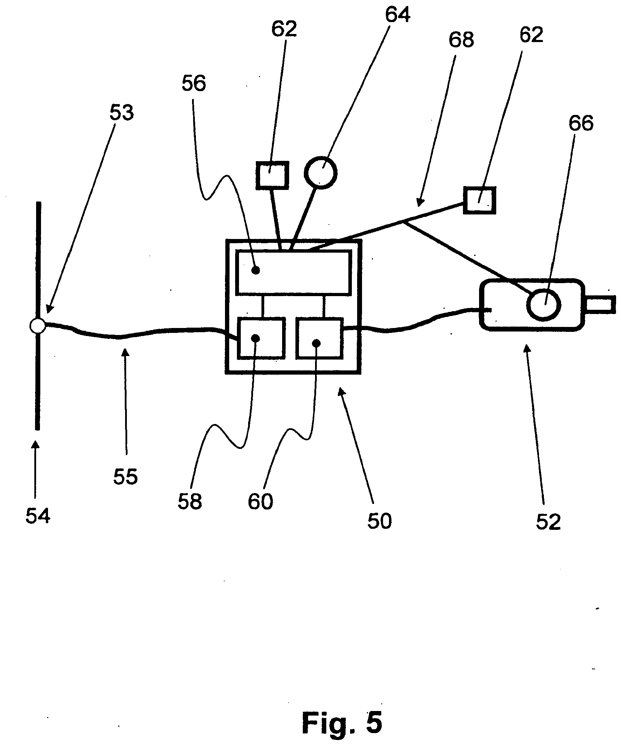

Figur 5 zeigt eine erfindungsgemäße Verwendung eines Feldgeräts aus Figur 1 bis 4. Das Feldgerät ist ein Umrichter 50, der an einen Elektromotor 52 angeschlossen ist und der diesen steuert oder regelt. Der Umrichter 50 ist weiterhin an einen Feldbus 54, beispielsweise einen AS-interface-Bus, angeschlossen, wobei genauer eine Anschlussleitung 55 einen vom Umrichter 50 umfassten Slave 58 über einen Anschlusspunkt 53 mit dem Feldbus 54 verbindet. Der Slave 58 ist somit im Umrichter 50 integriert; er wird im transparenten Modus betrieben. Ein Mikroprozessor, der als Steuerung 56 des Umrichters 50 ausgebildet ist, nimmt die vom Slave weitergeleiteten Daten gemäß der Anordnung in Figur 3 auf und verarbeitet sie anhand einer in ihm hinterlegten state machine nach Figur 4. Die Steuerung 56 dient gleichzeitig der für einen Umrichter funktionstypischen Ansteuerung oder Regelung des Motors 52, und zwar durch Steuerung einer mit letzterem verbundenen Leistungselektronik 60. Der Mikroprozessor 11 aus Figur 3 ist also vorteilhaft in die ohnehin notwendige und also vorhandene Steuerung 56 des Umrichters 50 integriert. An die Steuerung 56 sind direkt oder über einen weiteren Bus 68 Aktoren 62 und Sensoren 64, 66 angeschlossen, die gegebenenfalls im Motor 52 integriert sind, wie für Sensor 66 beispielhaft gezeigt. Der Umrichter 50 ist somit als ein Feldgerät ausgebildet, wie es für Anwendungen der dezentralen Technik vorteilhaft ist.

Insbesondere sind im Umrichter 50 Mittel integriert, die eine Verwendung des Umrichters 50 als Busteilnehmer ermöglichen. Die erfindungsgemäße Bereitstellung zweier logischer Slaves durch eine entsprechende state machine in der Steuerung 56 bewirkt besonders vorteilhaft, dass zwischen Feldbus 54 und Umrichter 50 einerseits binäre Daten zur Ansteuerung von Aktoren 62 oder Sensoren 64, 66 austauschbar sind und dass andererseits byte-orientierte Daten beispielsweise in Form von Parametern für den Umrichter 50 oder von Befehlen zum Betrieb des Motors 52 oder in Form von Informationen über den Zustand von Umrichter 50 oder Motor 52 übergebbar sind.

Bei einem weiteren erfindungsgemäßen Ausführungsbeispiel ist statt des AS-interface-Busses ein anderer Feldbus, insbesondere CAN, CAN-Open, DeviceNet, Profibus, INTERBUS, Ethernet, real-time Ethernet, Wireless-LAN, EIB oder LCN.

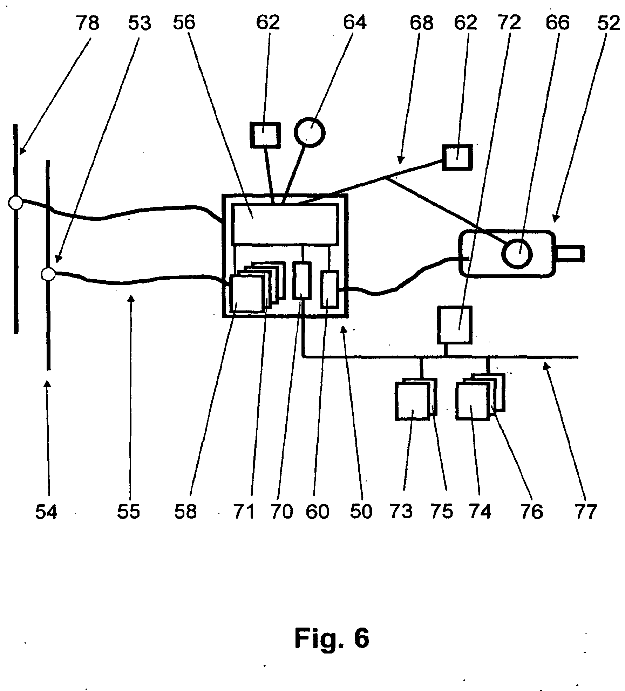

Figur 6 zeigt ein weiteres erfindungsgemäßes Ausführungsbeispiel. Ein Umrichter 50 ist über eine Anschlussleitung 55 an einen Feldbus 54 angeschlossen. Zur Kontaktierung werden in die Leitung des Feldbusses 54 an einem Anschlusspunkt 53 Kontaktdornen eingebracht.

Der Umrichter 50 ist zusätzlich an eine Energiebus 78 zur Leistungsversorgung angeschlossen.

Der Umrichter 50 umfasst eine Steuerung 56, einen Slave 58, eine Leistungselektronik 60, und ein Applikationsmodul 70.

Die Leistungselektronik 60 versorgt einen Motor 50 mit einem dreiphasigen Wechselstrom variabler Frequenz.

An die Steuerung 56 ist im Umrichter der Slave 58, das Anschlussmodul 70 und die Leistungselektronik 60 angeschlossen. An die Steuerung 56 sind von außen ein Aktor 62, ein Sensor 64 und ein Bus 68 angeschlossen, wobei der Bus 68 die Steuerung mit einem weiteren Aktor 62 und einem weiteren, am Motor 52 angebrachten Sensor 66.

Die Aktoren 62 sind beispielsweise als Stellelemente ausgeführt. Der Sensor 66 dient beispielsweise der Stromerfassung im Motor 52 und/oder der Drehzahlerfassung daselbst.

An das Applikationsmodul 70 ist ein Systembus 77 angeschlossen. Unter einem Systembus wird allgemein ein Bussystem verstanden, bei dem ein Datenbus, ein Adressbus und ein Steuerbus vereinigt sind. Der Systembus 77 umfasst außerdem einen Energiebus und ist nach einem firmeneigenen Protokoll eingerichtet.

Der Systembus 77 ist berührungslos an das Applikationsmodul 70 angeschlossen. Hierzu wird eine Box in einen Schacht des Umrichters 50 eingeschoben, an der der Systembus 77 angeschlossen ist.

Die Box enthält Mittel zur berührungslosen Leistungsübertragung in Form einer Spule mit ferromagnetischem Kern, die transformatorisch-induktiv an eine Spule im Applikationsmodul 70 gekoppelt ist.

Die Box enthält weiter Mittel zur Datenkommunikation mit dem Applikationsmodul 70 in Form einer Infrarot-Schnittstelle, die durch das Einschieben mit einer entsprechenden Einrichtung im Schacht des Umrichters 50 zur Deckung gebracht wird.

Vorzugsweise erfolgt die Datenübertragung durch Modulation des Leistungssignals.

In einem weiteren Ausführungsbeispiel ist der Anschluss des Systembusses 77 an das Applikationsmodul 70 durch berührungslos induktive Kopplung bewirkt. Bei einer derartigen Kopplung ist sekundärseitig, also auf der Seite des Systembusses 77, eine Aufnehmerspule kapazitiv und/oder induktiv ergänzt zu einem Parallelschwingkreis und/oder einem Reihenschwingkreis oder einer Kombination. Primärseitig, also im Applikationsmodul 70, wird in eine Sendeschleife ein Wechselstrom konstanter Frequenz eingeprägt, wobei die Aufnehmerspule induktiv gekoppelt ist an diese Sendeschleife. Der oder die sekundärseitig gebildeten Schwingkreise weisen eine Resonanzfrequenz auf, die im Wesentlichen mit der Frequenz des primärseitig eingeprägten Wechselstroms übereinstimmt. Je besser die Übereinstimmung ist, desto besser ist die Kopplung und damit der Wirkungsgrad der Leistungsübertragung.

In einem weiteren Ausführungsbeispiel ist der Systembus 77 induktiv nach dem transformatorischen Prinzip gekoppelt: Ein Einschiebeteil ist passgenau in das Applikationsmodul 70 einschiebbar, wobei in eingeschobener Position zwei ferromagnetische Bauteile derart in Kontakt gebracht werden, dass eine magnetisch geschlossene Schleifen gebildet ist. Hierbei ist ein Bauteil primärseitig, das andere Bauteil sekundärseitig angeordnet, wobei das primärseitige Bauteil mit einer Sendespule, das sekundärseitige Empfangsspule versehen ist.

Über die berührungslose Leistungsübertragung in Figur 5 sind Busteilnehmer und sonstige, an den Systembus 77 angeschlossene Geräte versorgt.

In Figur 6 sind an den Systembus 77 Slaves 72, 73 und 74 angeschlossen. Der Systembus 77 ist mit weiteren Busteilnehmern verbunden.

Im Auslieferungszustand ist der Slave 58 des Umrichters 50 mit der Standard-Adresse "0" versehen. Bei Einbindung in den Feldbus 54 wird der Slave 58 als neuer Teilnehmer erkannt und mit einer neuen Adresse versehen. Sodann realisiert der Slave 58 eine Anzahl von virtuellen Slaves 71, die in den einzelnen Zyklen im Feldbus 54 nacheinander mit der neuen Adresse angesprochen werden.

Die virtuellen Slaves 71 repräsentieren die in den Systembus 77 eingebundenen Slaves 72, 73 und 74 und Slaves weiterer Busteilnehmer.

In einer Weiterbildung sind in den Slaves 73 und/oder 74 oder in den Slaves weiterer Busteilnehmer ein oder mehrere virtuelle Slaves 75, 76 realisierbar. In diesem Fall verschickt der Slave 58 nach einer Adresszuweisung durch den Master des Feldbusses 54 eine Anfrage mindestens an die Slaves 72, 73, 74, wie viele virtuelle Slaves jeweils realisiert werden sollen.

Diese Anfrage erfolgt vorzugsweise bei der Initialisierung des Systembusses 77 und/oder bei einer Adressvergabe an die Slaves 72, 73, 74. Der Slave 58 handelt somit als Master des Systembusses 77.

Nach Empfang der Anzahlen von realisierten virtuellen Slaves bei jedem Teilnehmer des Systembusses 77 ermittelt der Slave 58 die Gesamtzahl der benötigten virtuellen Slaves 71. Und gruppiert diese nach Teilnehmereinheiten oder Funktionseinheiten.

Ein Beispiel für eine Funktionseinheit stellt ein Drehtisch dar, bei dem die Funktion ,Drehen um 90°' das Zusammenspiel mehrerer Aktoren und Sensoren erfordert.

Vorzugsweise meldet der Slave 58 die ermittelte Gesamtzahl der benötigten Slaves als Anzahl der benötigten Zyklen an den Master des Feldbusses 54 weiter, damit sich der Feldbus 54 an die neuen Kapazitätsanforderungen anpassen kann. Diese Meldung kann gemeinsam oder anstatt mit der Bestätigung einer erfolgreichen Adressvergabe an des Slave 58 versendet werden.

In einer Weiterbildung umfasst der Slave 58 einen Puffer, um zwischen unterschiedlichen Übertragungsraten im Feldbus 54 und im Systembus 77 zu vermitteln.

## Patentansprüche

1. Gerät (1) zum Anschluss (4, 8) an einen Bus (2),
das mit einer Standardadresse betrieben einen logischen Slave (3) realisiert,
**dadurch gekennzeichnet, dass**
ein zweiter Bus (77) mit mindestens zwei Busteilnehmern angeschlossen ist
und der Master des zweiten Busses vom Gerät umfasst ist
und das Gerät (1) mit einer von der Standardadresse unterschiedlichen Adresse betrieben mindestens zwei logische Slaves (3A, 3B) realisiert,
wobei nach Adressenvergabe mindestens ein Teil der logischen Slaves (71) die Busteilnehmer des zweiten Busses (77) repräsentiert.

2. Gerät nach dem vorangegangenen Anspruch,
**dadurch gekennzeichnet, dass**
der zweite Bus ein Systembus mit integriertem Energiebus ist, insbesondere wobei die Datenkommunikation durch Modulation eines Leistungssignals erfolgt.

3. Gerät nach mindestens einem der vorangegangenen Ansprüche,
**dadurch gekennzeichnet, dass**
der zweite Bus berührungslos angekoppelt ist, insbesondere induktiv,
und/oder dass
der Bus ein Feldbus ist, insbesondere CAN, CAN-Open, DeviceNet, Profibus, INTERBUS, AS-interface, Ethernet, Wireless-LAN, EIB, LCN.

4. Gerät nach mindestens einem der vorangegangenen Ansprüche,
**dadurch gekennzeichnet, dass**
das Gerät eine Umschaltlogik umfasst, die bei einem Wechsel von einer Standardadresse, insbesondere von einer Auslieferungsadresse oder von Adresse "0", auf einen anderen Adressen-Wert das Gerät vom ersten in den zweiten Modus versetzt.

5. Gerät nach mindestens einem der vorangegangenen Ansprüche,
**dadurch gekennzeichnet, dass**
das Gerät bei Zuweisung der Adresse "0" im ersten Modus arbeitet
und bei Zuweisung einer Adresse ungleich "0" im zweiten Modus arbeitet,
und/oder dass
die mindestens zwei logischen Slaves voneinander verschiedene Profile aufweisen.

6. Gerät nach mindestens einem der vorangegangenen Ansprüche,
**dadurch gekennzeichnet, dass**
das Gerät einen Slave-IC und den mit diesem verbundenen Rechner, insbesondere Mikroprozessor mit Speicher, umfasst, wobei der Slave-IC im transparenten Modus verwendbar ist,
und/oder dass
der Busteilnehmer als AS-interface-Slave oder anderer Feldbus-Slave ausgebildet ist,
und/oder dass
der Rechner von einem Umrichter oder einer Steuerung umfasst ist, insbesondere der Rechner zur Steuerung und/oder Regelung von Aktoren, Elektromotoren oder dergleichen vorgesehen ist.

7. Umrichter
**dadurch gekennzeichnet, dass**
ein Gerät zum Anschluss an einen Bus integriert ist,
wobei das Gerät nach mindestens einem der vorangegangenen Ansprüche ausgebildet ist.

8. Umrichter nach mindestens einem der vorangegangenen Ansprüche
**dadurch gekennzeichnet, dass**
der Mikroprozessor des Geräts zum Anschluss an einen Bus in die Steuerung des Umrichters, insbesondere in die Ansteuerung der Leistungselektronik des Umrichters, integriert ist.

9. Umrichter nach mindestens einem der vorangegangenen Ansprüche
**dadurch gekennzeichnet, dass**
Anschlussmittel für den Anschluss von Aktoren und/oder Sensoren und/oder einem Bus, beispielsweise MOVILINK®-Bus, und/oder Schaltausgänge und/oder umfasst sind, wobei diese Anschlussmittel und/oder Schaltausgänge vom Bus ansteuerbar beziehungsweise auslesbar sind.

10. Verfahren zur Adressierung eines als Busteilnehmer vorgesehenen Geräts,
mit zwei logischen Slaves,
wobei
- das Gerät vor der Adressierung mit einer Standardadresse, insbesondere Adresse "0", versehen wird und in einem ersten Modus, insbesondere Standardadressiermodus, betrieben wird,
- dem Gerät eine andere Adresse zugewiesen wird,
- und dann das Gerät nach Adresszuweisung mindestens zwei logische Slaves realisiert.
**dadurch gekennzeichnet, dass**
ein zweiter Bus vorgesehen ist,
wobei
- nach der Zuweisung einer Adresse das Gerät ermittelt, wie viele Busteilnehmer an den zweiten Bus angeschlossen sind und
- nach der Ermittlung der Anzahl der Busteilnehmer im zweiten Bus das Gerät diese Anzahl als logische Slaves realisiert, und
- die logischen Slaves mit der zugewiesenen Adresse nacheinander in den Zyklen des ersten Busses angesprochen werden.

11. Verfahren nach mindestens einem der vorangegangenen Ansprüche,
**dadurch gekennzeichnet, dass**
die Slaves im erweiterten Adressiermodus mit der zugewiesenen Adresse alternierend jeweils in aufeinanderfolgenden Zyklen als A-Adresse beziehungsweise B-Adresse angesprochen werden.

12. Verfahren nach mindestens einem der vorangegangenen Ansprüche,
**dadurch gekennzeichnet, dass**
die Ermittlungs-Anfrage an die Busteilnehmer des zweiten Busses eine Adressvergabe umfasst,
und/oder dass
jeder Busteilnehmer des zweiten Busses nach der Ermittlungs-Anfrage durch das Gerät jeweils eine Anzahl logischer Slaves realisiert und diese Anzahl als Antwort auf die Ermittlungs-Anfrage meldet.

## Claims

1. Device (1) for connection (4, 8) to a bus (2),
which device when operated with a standard address implements a logical slave (3),
**characterised in that**
a second bus (77) with at least two bus nodes is connected and the master of the second bus is included in the device and the device (1), when operated with an address different from the standard address, implements at least two logical slaves (3A, 3B),
after the address assignment, at least some of the logical slaves (71) representing the bus nodes of the second bus (77).

2. Device according to the preceding claim,
**characterised in that**
the second bus is a system bus with integrated energy bus, in particular the data communication taking place by modulation of a power signal.

3. Device according to at least one of the preceding claims,
**characterised in that**
the second bus is coupled in a contactless manner, in particular inductively,
and/or **in that**
the bus is a field bus, in particular CAN, CAN-Open, DeviceNet, Profibus, INTERBUS, AS-interface, Ethernet, Wireless-LAN, EIB, LCN.

4. Device according to at least one of the preceding claims,
**characterised in that**
the device comprises switching logic which, when changing from a standard address, in particular from a delivery address or from address "0", to another address value, switches the device from the first to the second mode.

5. Device according to at least one of the preceding claims,
**characterised in that**
the device operates in the first mode when assigned the address "0"
and operates in the second mode when assigned an address not equal to "0",
and/or **in that**
the at least two logical slaves have different profiles from one another.

6. Device according to at least one of the preceding claims,
**characterised in that**
the device comprises a slave IC and the computer connected thereto, in particular microprocessor with memory, the slave IC being usable in transparent mode,
and/or **in that**
the bus node is designed as an AS-interface slave or other field bus slave,
and/or **in that**
the computer is included in a converter or a controller, in particular the computer is provided for controlling and/or regulating actuators, electric motors or the like.

7. Converter,
**characterised in that**
a device for connection to a bus is integrated,
the device being designed according to at least one of the preceding claims.

8. Converter according to at least one of the preceding claims,
**characterised in that**
the microprocessor of the device for connection to a bus is integrated into the controller of the converter, in particular into the driver of the power electronics of the converter.

9. Converter according to at least one of the preceding claims,
**characterised in that**
connection means for the connection of actuators and/or sensors and/or a bus, for example MOVILINK® bus, and/or switching outputs and/or [sic] are included, these connection means and/or switching outputs being drivable or readable by the bus.

10. Method for addressing a device provided as a bus node, having two logical slaves,
- the device before the addressing being provided with a standard address, in particular address "0", and being operated in a first mode, in particular standard addressing mode,
- the device being assigned a different address,
- and then the device after the address assignment implementing at least two logical slaves,
**characterised in that**
a second bus is provided,
- the device determining, after the assignment of an address, how many bus nodes are connected to the second bus and
- after the determination of the number of bus nodes in the second bus, the device implementing this number as logical slaves, and
- the logical slaves being addressed with the assigned address successively in the cycles of the first bus.

11. Method according to at least one of the preceding claims,
**characterised in that**
the slaves in the extended addressing mode are addressed with the assigned address alternately, in each case in successive cycles, as A address and B address.

12. Method according to at least one of the preceding claims,
**characterised in that**
the determination inquiry to the bus nodes of the second bus comprises an address assignment,
and/or **in that**
each bus node of the second bus, after the determination inquiry by the device, implements in each case a number of logical slaves and indicates this number as a reply to the determination inquiry.

## Revendications

1. Appareil (1) destiné à la connexion (4, 8) à un bus (2),
qui réalise un esclave logique (3) quand il fonctionne avec une adresse standard,
**caractérisé en ce**
**qu'**un deuxième bus (77) avec au moins deux participants au bus est connecté,
et **que** le maître du deuxième bus est compris par l'appareil
et **que** l'appareil (1) réalise au moins deux esclaves logiques (3A, 3B) quand il fonctionne avec une adresse différente de l'adresse standard,
dans lequel, après attribution d'une adresse, au moins une partie des esclaves logiques (71) représente les participants au bus du deuxième bus (77).

2. Appareil selon au moins une des revendications précédentes,
**caractérisé en ce**
**que** le deuxième bus est un bus système avec bus d'énergie intégré, la communication de données ayant lieu en particulier par modulation d'un signal de puissance.

3. Appareil selon au moins une des revendications précédentes,
**caractérisé en ce**
**que** le deuxième bus est couplé sans contact, en particulier par induction,
et/ou
**que** le bus est un bus de terrain, en particulier CAN, CAN-Open, DeviceNet, Profibus, INTERBUS, AS-interface, Ethernet, Wireless-LAN, EIB, LCN.

4. Appareil selon au moins une des revendications précédentes,
**caractérisé en ce**
**que** l'appareil comprend une logique de commutation qui, lors d'un passage d'une adresse standard, en particulier d'une adresse de livraison ou de l'adresse « 0 », à une autre valeur d'adresse, met l'appareil du premier mode dans le deuxième mode.

5. Appareil selon au moins une des revendications précédentes,
**caractérisé en ce**
**que** l'appareil travaille dans le premier mode quand l'adresse « 0 » lui est affectée et dans le deuxième mode quand une adresse différente de « 0 » lui est affectée,
et/ou
**que** lesdits au moins deux esclaves logiques présentent des profils différents l'un de l'autre.

6. Appareil selon au moins une des revendications précédentes,
**caractérisé en ce**
**que** l'appareil comprend un CI esclave et l'ordinateur relié à celui-ci, en particulier un microprocesseur avec mémoire, le CI esclave pouvant être utilisé en mode transparent,
et/ou
**que** le participant au bus est réalisé sous la forme d'un esclave AS-interface ou d'un autre esclave de bus de terrain,
et/ou
**que** l'ordinateur est compris par un variateur de vitesse ou une commande, en particulier l'ordinateur est prévu pour la commande et/ou la régulation d'actionneurs, de moteurs électriques ou analogues.

7. Variateur de vitesse,
**caractérisé en ce**
**qu'**un appareil destiné à la connexion à un bus est intégré,
l'appareil étant réalisé selon au moins une des revendications précédentes.

8. Variateur de vitesse selon au moins une des revendications précédentes,
**caractérisé en ce**
**que** le microprocesseur de l'appareil destiné à la connexion à un bus est intégré dans la commande du variateur de vitesse, en particulier dans la commande de l'électronique de puissance du variateur de vitesse.

9. Variateur de vitesse selon au moins une des revendications précédentes,
**caractérisé en ce**
**qu'**il comprend des moyens de connexion pour la connexion d'actionneurs et/ou de capteurs et/ou d'un bus, par exemple un bus MOVILINK®, et/ou des sorties de commutation, ces moyens de connexion et/ou sorties de commutation pouvant être commandés ou lus par le bus.

10. Procédé d'adressage d'un appareil prévu comme participant à un bus,
comprenant deux esclaves logiques,
selon lequel
- l'appareil est muni avant l'adressage d'une adresse standard, en particulier de l'adresse « 0 » et fonctionne dans un premier mode, en particulier un mode d'adressage standard,
- une autre adresse est affectée à l'appareil,
- et l'appareil réalise ensuite, après affectation d'une adresse, au moins deux esclaves logiques.
**caractérisé en ce**
**qu'**un deuxième bus est prévu,
le procédé consistant en ce que
- après l'affectation d'une adresse, l'appareil détermine combien de participants au bus sont connectés au deuxième bus et
- après la détermination du nombre de participants au bus sur le deuxième bus, l'appareil réalise ce nombre en tant qu'esclaves logiques, et
- les esclaves logiques sont adressés successivement avec l'adresse affectée dans les cycles du premier bus.

11. Procédé selon au moins une des revendications précédentes,
**caractérisé en ce**
**que** les esclaves en mode d'adressage étendu sont adressés alternativement dans des cycles successifs avec l'adresse affectée sous la forme d'une adresse A, respectivement d'une adresse B,

12. Procédé selon au moins une des revendications précédentes,
**caractérisé en ce**
**que** la demande de détermination aux participants au bus du deuxième bus comprend une attribution d'adresse,
et/ou
**qu'**après la demande de détermination par l'appareil, chaque participant au bus du deuxième bus réalise un nombre respectif d'esclaves logiques et annonce ce nombre en réponse à la demande de détermination.
